# EUROPEAN PATENT APPLICATION

(11) **EP 4 574 592 A1**
(43) Date of publication of application: **25.06.2025**
(21) Application number: 24220999.7
(22) Date of filing: 18.12.2024
(51) Int. Cl.: B60T 7/20, B60D 1/64, B60T 13/66, B60T 17/04, B60T 15/20

(54) **DEVICE FOR CONTROLLING THE BRAKING OF A TRAILER**

(30) Priority: 18.12.2023 IT 202300027057
(71) Applicant: Slanzi Oleodinamica S.r.l., 42017 Novellara (RE) (IT)
(72) Inventor: VENTURI, Luca, 42017 Novellara (RE) (IT); ANNONI, Matteo, 42017 Novellara (RE) (IT)
(74) Representative: Locatelli, Marco Mario

(57) **Abstract**

The Device (1) for controlling the braking of a trailer comprises:
one first female joint (2) communicating with a control line (3) connectable and intended to receive a first male joint (4);
one second female joint (5) communicating with an additional line (6) and intended to receive a second male joint (7);
one primary braking line (8a);
one secondary braking line (8b);
at least one accumulator (9) connected to the control line (3);
valve means (10) placed between the accumulator (9) and the secondary braking line (8b) and movable between one supply position and one isolation position;
at least one power line (11) connected to the second female joint (5);
sensing means (15) arranged along the additional line (6);
wherein:
the additional line (6) comprises electrical connecting means (16) placed between the second female joint (5) and the valve means (10);
the sensing means (15) are configured to command the movement of the valve means (10) between the supply position and the isolation position by means of the connecting means (16);
the power line (11) is configured to exchange at least one electric/electronic signal with the valve means (10) by means of the connecting means (16);
wherein the device (1) comprises:
a first portion (22) connected to the second female joint (5) and connectable to the second male joint (7);
a second portion (23) coupled, in use, to the first portion (22) in a removable manner; and wherein:
the connecting means (16) are placed between the second portion (23) and the valve means (10);
the coupling and uncoupling of the portions (22, 23) electrically connects and disconnects the connecting means (16) from the sensing means (15) and/or from the power line (11), respectively.

## Description

### Technical Field

The present invention relates to a device for controlling the braking of a trailer.

### Background Art

To date, the towing vehicles are connected to their trailers by means of a connecting device which allows their respective braking systems to be set in communication with each other, so that the braking of the towing vehicle operated by the operator also causes braking of the towed trailer.

The braking system of the trailer is therefore driven by the braking system of the tractor in order to synchronize the braking forces operating on the same.

Specifically, the connecting device between the towing vehicle and the relevant trailer comprises a pair of female joints associated with the trailer and intended to receive corresponding male joints connected to the towing vehicle.

More specifically, there is a first female joint communicating with a control line connectable to the braking system of the trailer and a second female joint communicating with an additional line adapted to command the parking and/or automatic brake of the trailer itself.

The control line and the additional line, generally consisting of hoses adapted to carry a work fluid (e.g., pressurized oil), communicate with the brake valve mounted on the trailer and adapted to adjust the outflow of the work fluid towards the braking line and towards the automatic and/or parking brake.

Specifically, the valve is responsible for applying and releasing the automatic and/or parking brake depending on the pressure of the work fluid within the additional line. In this regard, the valve connects and disconnects an accumulator to the braking line of the trailer so as to apply and release the automatic and/or parking brake, respectively. More particularly, the valve isolates the accumulator from the automatic and/or parking brake, by releasing it, only when the pressure of the work fluid within the additional line reaches a predefined pressure (usually between 15 bar and 35 bar). At the same time, the valve gives the command of the trailer braking system to the control line, which sets the braking system of the towing vehicle in fluid-operated communication with that of the trailer, thus synchronizing the braking forces thereof.

On the contrary, when the pressure within the additional line drops below the predefined value, the valve connects the accumulator to the automatic and/or parking brake of the trailer, which is then automatically applied.

This expedient allows the device to brake the trailer safely even if the connection between the braking systems of the towing vehicle and of the trailer should be compromised, e.g. due to a break in the hose lines, to a disconnection of the joints or similar causes.

However, such devices do have some limitations related to monitoring the status of the trailer.

In particular, the fluid-operated connection provided by the additional line significantly limits the functions of the device.

In fact, the additional line only allows the automatic and/or parking brakes to be operated automatically in the event of a critical situation, without providing further useful tools for monitoring the status of the trailer.

As a result, the user of known devices is forced to perform time-consuming and complicated manual operations as well as practical tests to ensure that the braking systems of the towing vehicle and of the trailer are properly connected before driving the vehicle.

In addition, despite the aforementioned operations and tests, the known devices force the user to personally check, e.g., through the rearview mirrors of the towing vehicle, the status of the trailer while towing, so that he or she notices an accidental disconnection as soon as possible.

In addition, as a result of the disconnection of the trailer from the towing vehicle, it often happens that the devices have to undergo lengthy and complex repair jobs before allowing the trailer to be safely towed again.

In particular, it may happen that the trailer accidentally moves away from the vehicle and therefore leads to tension the hydraulic lines, such as the control line and/or the additional line, and the power lines, provided for the operation of the accumulator, that join the towing vehicle to the trailer.

In this regard, some known devices provide for adequate overload devices that enable the safe disconnection of the hydraulic lines. However, the same overload devices cannot be used for the power lines, which are therefore often subject to breakage, inevitably compromising the soundness of the device.

It is therefore easy to appreciate how, in this case, the operations to restore the correct functions of the connection between the towing vehicle and the trailer are time-consuming, complex and costly.

These drawbacks make the use of the devices of known type not very practical and functional.

### Description of the Invention

The main aim of the present invention is to devise a device for controlling the braking of a trailer which allows the functions of the device to be expanded compared with the devices of known type.

A further object of the present invention is to devise a device for controlling the braking of a trailer which allows it to work more safely than the devices known to date.

An additional object of the present invention is to devise a device for controlling the braking of a trailer which allows easy and safe verification of the proper connection of the various components involved.

Still one object of the present invention is to devise a device which can be quickly and easily restored if an unwanted disconnection of the trailer from the towing vehicle occurs.

Another object of the present invention is to devise a device for controlling the braking of a trailer which can overcome the aforementioned drawbacks of the prior art within the framework of a simple, rational, easy and effective to use, as well as inexpensive solution.

The aforementioned objects are achieved by this device having the characteristics of claim 1.

### Brief Description of the Drawings

Other characteristics and advantages of the present invention will become more apparent from the description of a preferred, but not exclusive, embodiment of a device for controlling the braking of a trailer, illustrated by way of an indicative, yet non-limiting example in the accompanying tables of drawings in which:
Figure 1 is a schematic view of the device according to the invention;
Figure 2 is a schematic view of the device shown in Figure 1 in another configuration according to the invention;

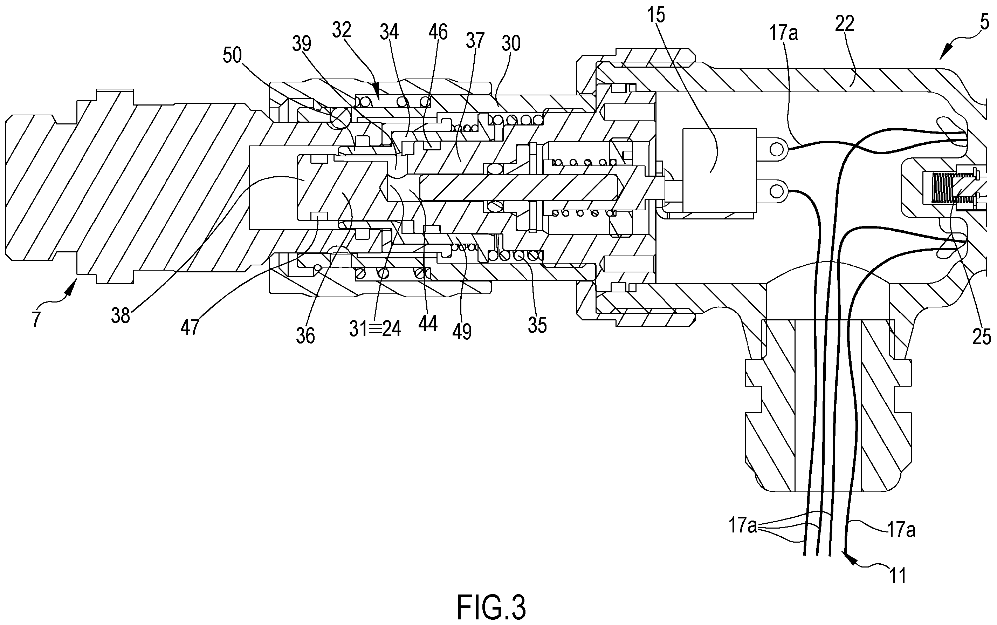

Figure 3 is a sectional view of a portion of a component of the device according to the invention;

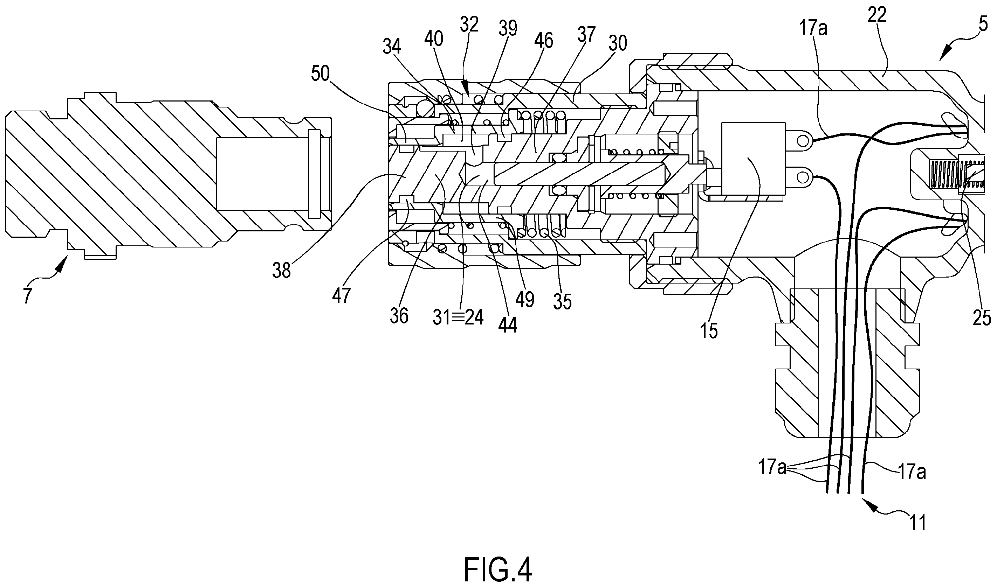

Figure 4 is a cross-sectional view of the portion of the component shown in Figure 3 in another configuration according to the invention;

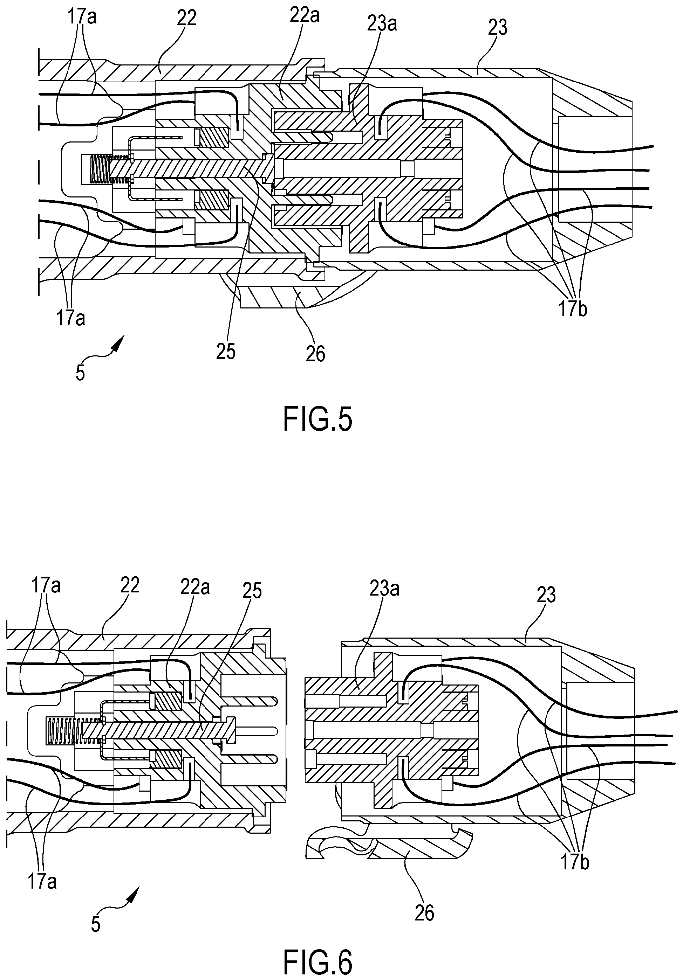

Figure 5 is a detailed view of another portion of the component shown in Figures 3 and 4 according to the invention;
Figure 6 is a detailed view of the portion of the component shown in Figure 5 in another configuration according to the invention;

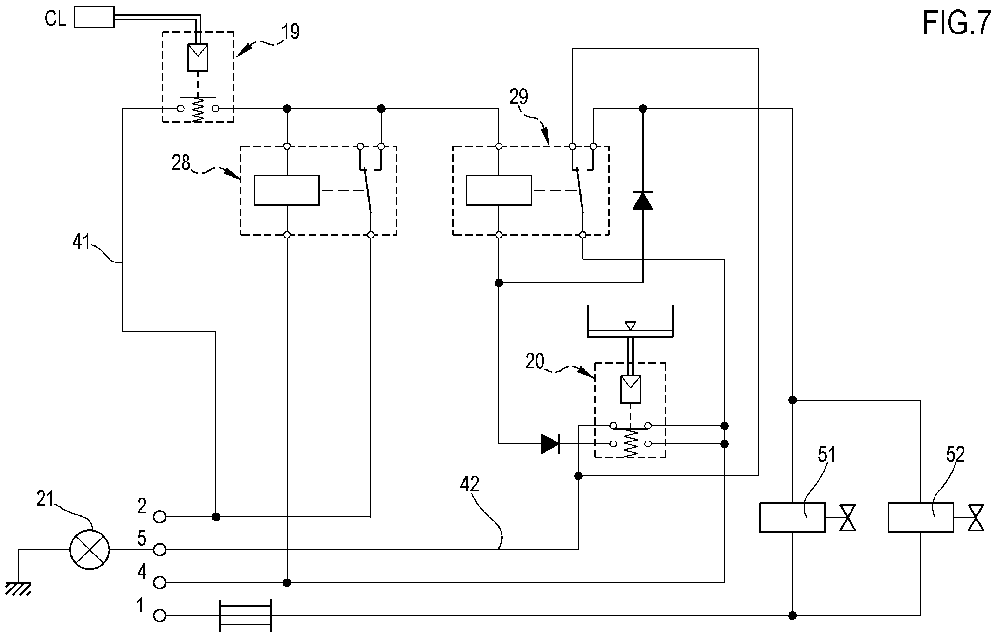

Figure 7 is a schematic view of some elements of the device according to the invention;

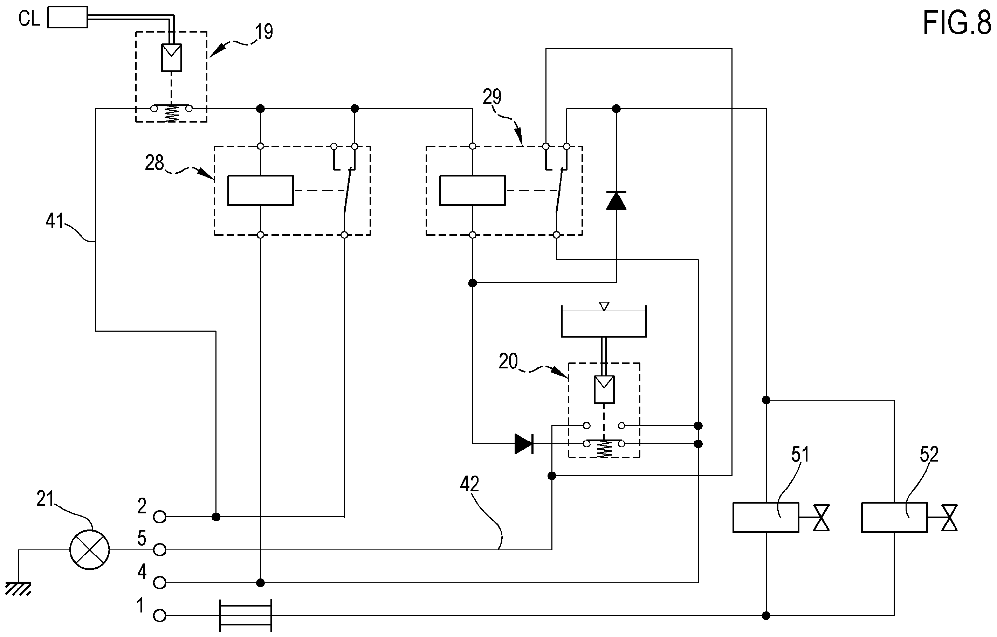

Figure 8 is a schematic view of the components shown in Figure 7 in another configuration;
Figures 9 and 10 are schematic views of possible embodiments of the device according to the invention.

### Embodiments of the Invention

With particular reference to these figures, reference numeral 1 globally denotes a device 1 for controlling the braking of a trailer.

The device 1 for controlling the braking of a trailer comprises at least a first female joint 2 communicating with a control line 3 connectable to the braking system of a trailer and intended to receive a first male joint 4 of a towing vehicle connectable to a source of a work fluid at a first pressure.

Preferably, the control line 3 consists of a hose of the flexible type.

Conveniently, the control line 3 connects the braking system of the towing vehicle to the braking system of the trailer, thus synchronizing the braking thereof.

In other words, via the control line 3, the actuation of the braking system of the vehicle causes the actuation of the braking system of the trailer.

According to the invention, the device 1 comprises at least a second female joint 5 communicating with an additional line 6 adapted to control the automatic and/or parking brake of the trailer and intended to receive a second male joint 7 of a towing vehicle connectable to a source of a work fluid at a second pressure.

Advantageously, the connection of the second female joint 5 to the second male joint 7 connects the additional line 6 to the parking brake of the towing vehicle.

Specifically, the second pressure of the additional line 6 is controlled by the parking brake of the towing vehicle.

More specifically, the parking brake of the towing vehicle is applied and released to depressurize and pressurize the additional line 6 respectively, which, in this way, communicates the status of the towing vehicle to the trailer.

Conveniently, the additional line 6 is adapted to apply the automatic and/or parking brake of the trailer in the event of an emergency, i.e., when the trailer disengages from the towing vehicle.

In more detail, in this case, the disconnection of the trailer causes the additional line 6 to break and/or to disconnect from the towing vehicle which, in turn, causes the automatic and/or emergency brake to be applied, preferably automatically.

In addition, the device 1 comprises at least one primary braking line 8a connectable to the braking system of the trailer.

Specifically, the primary braking line 8a is adapted to supply the braking system of the trailer with the work fluid required for its operation in synchrony with the braking system of the towing vehicle.

In more detail, the primary braking line 8a is supplied from the control line 3. According to the invention, the device 1 comprises at least one secondary braking line 8b connectable to the automatic and/or parking brake of the trailer.

Specifically, the secondary braking line 8b is adapted to supply the automatic and/or parking brake of the trailer with the fluid required for its operation substantially to keep the trailer braked.

Preferably, the primary braking line 8a and the secondary braking line 8b coincide. Further embodiments of the device 1 cannot, however, be ruled out wherein the primary braking line 8a and the secondary braking line 8b are separate from each other. According to the invention, the device 1 comprises at least one accumulator 9 connected to the control line 3 in a fluid-operated manner and connectable to the secondary braking line 8b in a fluid-operated manner.

Conveniently, the accumulator 9 is adapted to store within it an amount of work fluid which can be used to intervene in the operation of the automatic and/or parking brake of the trailer.

Specifically, the accumulator 9 is adapted to store within it enough work fluid to apply the automatic and/or parking brake of the trailer, i.e., to prevent the trailer from moving, e.g. in the event of an emergency.

According to the invention, the device 1 comprises valve means 10 placed between the accumulator 9 and the secondary braking line 8b and movable between at least one supply position, wherein the accumulator 9 is placed in communication with the secondary braking line 8b, and at least one isolation position, wherein the accumulator 9 is isolated from the secondary braking line 8b.

Specifically, the valve means 10 comprise a pair of solenoid valves 51, 52 which allow the movement between the supply position and the isolation position. Advantageously, the valve means 10 are mounted on the trailer.

Conveniently, the accumulator 9 supplies the secondary braking line 8b with the work fluid required to apply the automatic and/or parking brake of the trailer, preventing the movement thereof.

In other words, in the supply position, the trailer remains braked.

In addition, preferably, the valve means 10 are moved to the supply position in the absence of power supply and/or of electric/electronic connection, as described later in this disclosure.

In the isolation position, however, the trailer is free to be towed.

Specifically, the valve means 10 are moved to the isolation position as a result of the performance of one or more start-up operations, as described later in this disclosure with reference to the method of using the device 1.

According to the invention, the device 1 comprises at least one power line 11 connected to the second female joint 5 and provided with an electrical connector 12 adapted to be coupled to a corresponding electrical connector of the towing vehicle.

Specifically, the power line 11 is connected to the additional line 6.

Conveniently, the electrical connector of the towing vehicle is connected to the electric/electronic system of the vehicle itself, e.g. to communicate with an electric/electronic control unit.

According to the invention, the device 1 comprises at least a first portion 22 connected to the second female joint 5 and connectable to the second male joint 7 of the towing vehicle, and at least a second portion 23 coupled, in use, to the first portion 22 in a removable manner.

Specifically, the device 1 comprises joining means 53 placed between the second female joint 5 and the first portion 22, connecting them together in a fluid-operated manner. In more detail, the joining means 53 define a tubular body.

In even more detail, the joining means 53 are of the flexible type.

It cannot, however, be ruled out that the joining means 53 may be of the rigid type. Conveniently, the power line 11 is connected to the first portion 22.

Advantageously, the power line 11 comprises one or more linking lines 17a, e.g., of the type of electrical cables, placed between the second female joint 5 and the electrical connector 12.

In detail, the linking line(s) 17a are placed between the first portion 22 and the electrical connector 12.

Specifically, each linking line 17a of the power line 11 is connected to a corresponding pole, not shown in the figures, of the electrical connector 12.

According to the invention, the device 1 comprises sensing means 15 of the second pressure arranged along the additional line 6.

Preferably, the sensing means 15 are of the type of an electric/electronic device, e.g. a switch, switchable according to the value of the second pressure of the work fluid. Specifically, the sensing means 15 are placed between the second female joint 5 and the additional line 6.

In more detail, the sensing means 15 receive the work fluid at the second pressure by means of the second female joint 5 and the joining means 53.

Advantageously, the sensing means 15 are placed between the first portion 22 and the additional line 6.

According to the invention, the additional line 6 comprises electrical connecting means 16 placed between the second female joint 5 and the valve means 10.

In addition, the sensing means 15 are configured to command the movement of the valve means 10 between the supply position and the isolation position by means of the connecting means 16 depending on the second sensed pressure.

Specifically, the electrical connecting means 16 are placed between the second portion 23 and the valve means 10.

In addition, the power line 11 is configured to exchange at least one electric/electronic signal with the valve means 10 by means of the connecting means 16.

In other words, the connecting means 16 electrically connect the valve means 10 to the sensing means 15 and to the power line 11.

Conveniently, the connecting means 16 comprise one or more connecting lines 17b.

Specifically, each linking line 17a is electrically connected, in use, to one or more corresponding connecting lines 17b, so as to make, between the poles of the electrical connector 12, one or more electrical communication circuits 41, 42 configured to allow the exchange of electrical signals between the power line 11 and the valve means 10. Advantageously, the power line 11 is configured to transmit at least one electric/electronic command signal to the valve means 10 so as to command the displacement of the valve means 10.

For example, such an electric/electronic signal is of the type of an electric current supplying the valve means 10.

Specifically, the power line 11 is operationally connected to the sensing means 15 and is configured to transmit at least one electric/electronic command signal upon reaching a threshold value of the second pressure sensed by said sensing means 15. Specifically, the sensing means 15 enable and prevent the transmission of the electric/electronic command signal depending on the second sensed pressure. Conveniently, the sensing means 15 are electrically connected along a linking line 17a and are configured to close and open at least one command circuit 41 employed to transmit the electric/electronic command signal to allow and prevent the transmission thereof, respectively.

Specifically, the sensing means 15 prevent the power line 11 from transmitting at least one electric/electronic command signal when the second pressure is lower than or equal to the threshold value.

On the other hand, the sensing means 15 allow the power line 11 to transmit at least one electric/electronic command signal when the second pressure is greater than or equal to the threshold value.

Specifically, the power line 11 is configured to exchange a plurality of electric/electronic command signals with the valve means 10.

Advantageously, the device 1 comprises verification means, not shown in the figures, which are configured to sense the ignition of the towing vehicle. In addition, the power line 11 is configured to transmit the electric/electronic command signal to the valve means 10 according to the ignition sensed by the verification means.

In other words, the electric/electronic command signal is transmitted to the valve means 10 as a result of the ignition of the towing vehicle.

Conveniently, the device 1 comprises measuring means 19 of the first pressure configured to allow the transmission of the electronic command signal upon reaching a reference value of the first pressure measured by the measuring means 19.

Preferably, the measuring means 19 are arranged along the control line 3. Advantageously, the measuring means 19 are mounted on the trailer.

Specifically, the measuring means 19 are of the type of an electric/electronic device, such as a switch, switchable when the first pressure of the work fluid reaches a value greater than or equal to the reference value.

In more detail, the measuring means 19 allow the transmission of the electric/electronic command signal when they measure a first pressure greater than the reference value. Therefore, the valve means 10 remain in the supply position (and the trailer remains braked) if the fluid within the control line 3 does not reach a pressure greater than or equal to the reference value.

Specifically, the measuring means 19 are electrically connected along the command circuit 41 and are configured to close the same circuit to allow the electric/electronic command signal to be transmitted, respectively.

In this way, the measuring means 19 allow the transmission of the electric/electronic command signal and thus the movement of the valve means 10 to the isolation position when the fluid within the control line 3 reaches a pressure greater than or equal to the reference value.

Conveniently, the device 1 comprises identifying means 20 of the pressure of the work fluid within the accumulator 9, which means are configured to allow the transmission of the electric/electronic command signal upon reaching a threshold value of the pressure of the work fluid identified by the identifying means 20.

Preferably, the identifying means 20 are of the type of an electric/electronic device, such as e.g. a switch (preferably of the type of two contact pairs or diverter), switchable when the pressure of the work fluid within the accumulator 9 reaches a pressure value greater than or equal to the switching value.

Advantageously, the identifying means 20 are mounted on the trailer.

Specifically, the identifying means 20 are electrically connected along the command circuit 41 and are configured to close and open the same circuit to allow and prevent the transmission of the electric/electronic command signal, respectively.

Therefore, the valve means 10 remain in the supply position (and the trailer remains braked) if the work fluid within the accumulator 9 does not reach a pressure greater than or equal to the switching value.

Appropriately, the pressure of the work fluid within the accumulator 9 increases as the amount of the work fluid housed within the accumulator itself increases.

Therefore, the valve means 10 remain in the supply position if an amount of work fluid is not stored within the accumulator 9 so as to reach a pressure greater than or equal to the switching value.

Advantageously, the power line 11 is configured to transmit at least one electric/electronic alarm signal depending on the identified pressure.

Specifically, the power line 11 transmits the electric/electronic alarm signal as long as the pressure of the work fluid within the accumulator 9 is less than or equal to the switching value.

Specifically, the identifying means 20 prevent and allow the transmission of the electric/electronic alarm signal when they measure a pressure of the work fluid within the accumulator 9 greater than and less than the switching value, respectively.

In this way, the electric/electronic alarm signal warns the user of the device 1 that the amount of fluid within the accumulator 9 is not enough to apply the parking and/or automatic brake of the trailer.

Specifically, the identifying means 20 are arranged along an alarm circuit 42 configured to transmit the electric/electronic alarm signal and are configured to close and open the same alarm circuit to allow and prevent the transmission of the alarm signal, respectively.

More specifically, the identifying means 20 are switchable between a consensus position, wherein they close the command circuit 41 and open the alarm circuit 42, and an alarm position, wherein they close the alarm circuit 42.

Appropriately, the identifying means 20 do not open the command circuit 41 in the switch from the consensus configuration to the alarm configuration.

In other words, once the command circuit 41 has been closed in the consensus configuration, it is not sufficient for the identifying means 20 to switch to the alarm configuration to open the command circuit 41.

Specifically, the accumulator 9 receives the work fluid required for the application of the parking and/or automatic brake of the trailer from the towing vehicle; in fact, the towing vehicle sends the work fluid to the accumulator 9 as a result of the actuation of the braking system of the same vehicle which pressurizes the control line 3. Accordingly, the alarm circuit 42 transmits the electric/electronic alarm signal to the towing vehicle until a first braking (first operation of the braking system of the towing vehicle) occurs by the towing vehicle and until the identifying means 20 measure a pressure value greater than or equal to the switching value (when the accumulator 9 is sufficiently charged).

In other words, the trailer can be safely towed when the electric/electronic alarm signal stops to be transmitted as a result of a first operation of the braking system of the towing vehicle. Otherwise, in the event of the electric/electronic alarm signal persisting, the driver of the towing vehicle shall operate the braking system of the towing vehicle longer so as to sufficiently fill the accumulator 9 and stop the transmission of the electric/electronic alarm signal. In the event of the electric/electronic alarm signal still persisting, it is necessary to check the hydraulic and/or electrical connections between the towing vehicle and the trailer.

In addition, the connecting means 16 are placed between the second portion 23 and the valve means 10. In this way, the coupling and uncoupling of the portions 22, 23 electrically connects and disconnects the connecting means 16 from the sensing means 15 and/or from the power line 11, respectively.

Conveniently, the power line 11 and the sensing means 15 are both electrically connectable to and disconnectable from the connecting means 16 when the second portion 23 is coupled to and uncoupled from the first portion 22, respectively. Specifically, the first portion 22 and the second portion 23 comprise respective multipole connectors 22a, 23a electrically couplable to each other in a removable manner to connect the linking lines 17a to the corresponding connecting lines 17b and to define the circuits 41, 42.

In fact, the multipole connector 22a receives the linking lines 17a, while the multipole connector 23a receives the connecting lines 17b.

Appropriately, the first portion 22 is adapted to receive the work fluid at the second pressure and houses the sensing means 15 so that the second pressure can be sensed.

Specifically, the first portion 22 defines an additional channel 24 for the passage of the work fluid to the second pressure and within which the sensing means 15 are arranged. In addition, the additional line 6 is of the electric/electronic type and is electrically connected to the sensing means 15.

Conveniently, the additional line 6 is of the electric/electronic type and is electrically connected to the sensing means 15.

Preferably, the additional line 6 coincides with the connecting means 16. Conveniently, the power line 11 is connected to the first portion 22, in this case to the multipole connector 22a.

Preferably, the first portion 22 comprises a cable gland adapted to receive the power line 11.

Advantageously, the electrical connector 12 is directly connected integral to the first portion 22.

In this way, the electrical connector 12 and the first portion 22 define a single rigid body piece.

Conveniently, the device 1 comprises at least one switching component 25 placed between the first and the second portions 22, 23 and switchable as a result of the coupling and uncoupling of the same.

Specifically, the switching element 25 is placed between the multipole connectors 22a, 23a.

In addition, the power line 11 is configured to transmit at least one electric/electronic warning signal depending on the switch of the switching component 25.

Specifically, the switching element 25 is configured to allow and prevent the transmission of at least one electric/electronic warning signal when the portions 22, 23 are uncoupled from and coupled to each other, respectively.

Conveniently, the switch of the switching component 25 causes the closure and opening of an emergency warning circuit of the trailer, not shown in the figures, defined by at least two linking lines 17a.

Specifically, when the portions 22, 23 are uncoupled, the switching component 25 is configured to switch and close the warning circuit on the first portion 22.

In this way, the power line 11 transmits the electric/electronic warning signal of the trailer's emergency.

Specifically, such an electric/electronic warning signal is transmitted to the electrical connector 12 to warn the user of the device, preferably on the towing vehicle, of an emergency.

Preferably, the electric/electronic warning signal transmitted to the connector 12 causes the actuation of a warning device, such as a warning light 21, of the towing vehicle.

Advantageously, the device 1 comprises temporary fastening means 26 for temporarily fastening the second portion 23 to the first portion 22 movable between an engagement position, wherein the second portion 23 is fastened to the first portion 22, and a disengagement position, wherein the second portion 23 is released from the first portion 22.

Specifically, the fastening means 26 are mechanically connected to the control line 3 and are movable from the engagement position to the disengagement position as a result of the tensioning and subsequent disconnection of the control line 3.

Preferably, with the disconnection of the control line 3 from the towing vehicle, e.g., by means of the disconnection of the first female joint 2 from the first male joint 4.

It cannot in fact be ruled out that the system 1 may comprise automatic disconnection means of the joints 2, 4 adapted to unfasten the latter upon exceeding a threshold tensile force (exerted on the joints 2, 4 as a result of the tensioning of the control line 3). Conveniently, the automatic disconnection means, not shown in the figures, are made on at least one of the joints 2, 4, preferably on the first female joint 2.

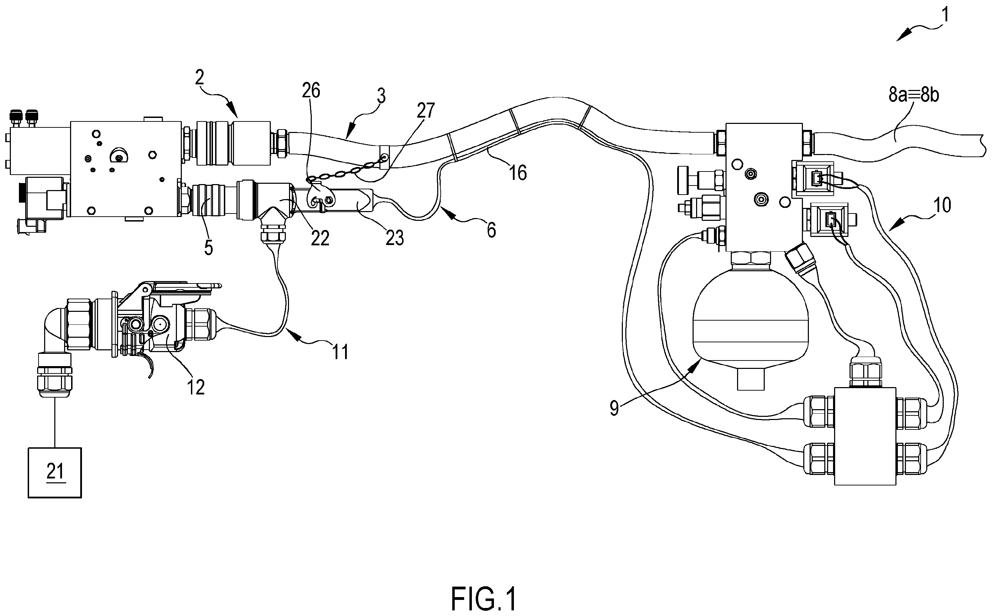

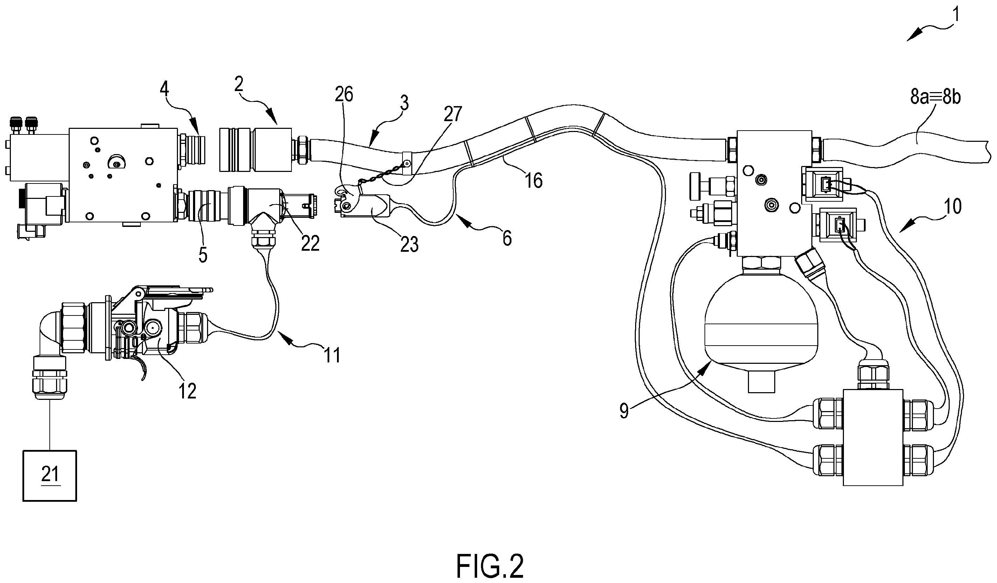

Preferably, as shown in the embodiments in Figures 1 and 2, the fastening means 26 are connected to the control line 3 by interposition of a connecting element 27, preferably of the flexible type, such as e.g. a cable or the like.

In this way, the tensioning and consequent disconnection of the control line 3 causes the tensioning of the connecting element 27 which, in turn, moves the fastening means 26 to the disengagement position.

As a result, in the disengagement position, the first portion and the second portion 22, 23 are free from the constraint of the fastening means 26 and can be uncoupled, e.g., as a result of the tensioning of the additional line 6.

Appropriately, the connecting means 16 are mechanically connected to the control line 3 and the fastening means 26 are displaced from the engagement position to the disengagement position before the connecting means 16 are put under tension as a result of the tensioning of the control line 3.

This expedient helps preserve the soundness of the connecting means 16.

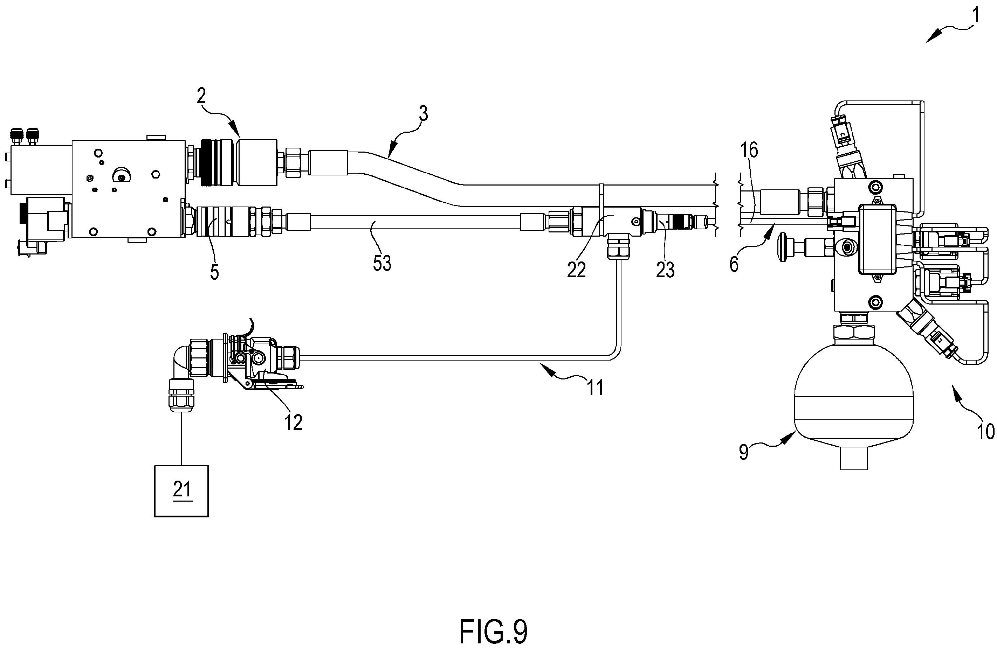

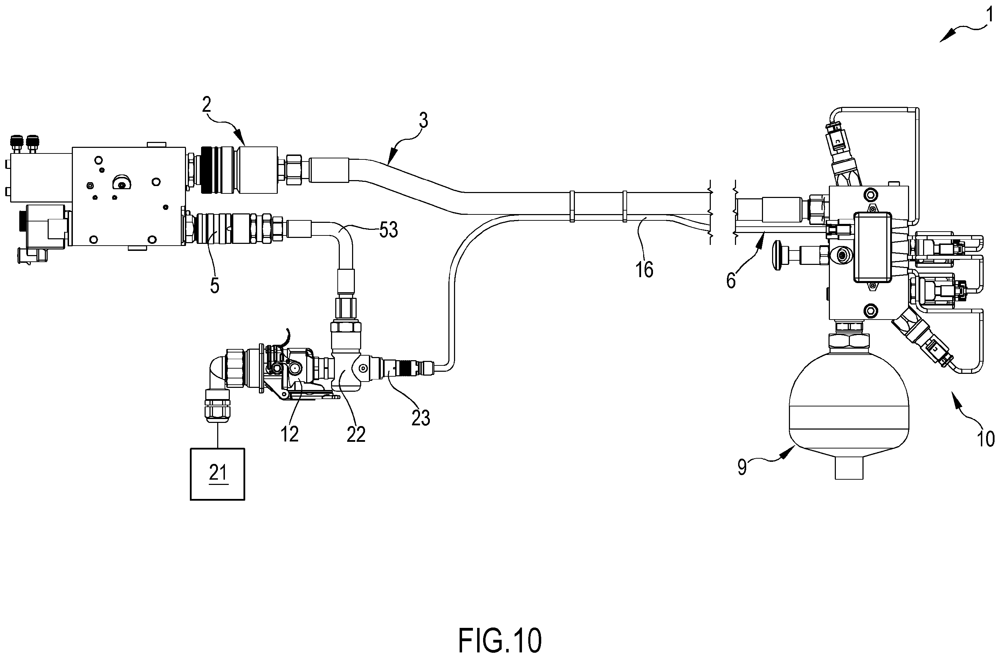

In the alternative embodiments shown in Figures 9 and 10, the fastening means 26 are of the interlocking type, placed between the first portion 22 and the second portion 23, and are displaced from the engagement position to the disengagement position as a result of the tensioning of the connecting means 16 alone.

Conveniently, the valve means 10 comprise:
- at least a first switching element 28 electrically connected to the connecting means 16 and to the measuring means 19, the first switching element 28 being switchable depending on the first sensed pressure and on the electric/electronic command signal;
- at least a second switching element 29 electrically connected to the first switching element 28 and to the identifying means 20, the second switching element 29 being switchable depending on the switch of the first switching element 28 and on the pressure identified by the identifying means 20.

In addition, the valve means 10 are moved between the supply position (wherein the trailer is braked) and the isolation position (wherein the trailer is free to be towed) depending on the switch of the switching elements 28, 29.

Specifically, the valve means 10 are moved from the supply position to the isolation position when both switching elements are switched.

In more detail, the first switching element 28 switches when it receives the electric/electronic command signal and when the first pressure value is greater than or equal to the reference value.

In other words, the first switching element 28 switches when there is enough pressure within the control line 3 and when it receives the electric/electronic command signal, preferably a command signal transmitted as a result of the ignition of the towing vehicle. Preferably, once switched, the first switching element 28 remains switched until it receives the electric/electronic command signal.

The second switching element 29, on the other hand, switches when the first switching element 28 is switched and when there is enough pressure within the accumulator 9. Preferably, once switched, the second switching element 29 remains switched until the first switching element 29 remains switched.

Preferably, the switching elements 28, 29 are of the type of relay or the like.

Advantageously, the second female joint 5 comprises a tubular body 30 defining a passage channel 31 of a work fluid and a valve assembly 32 housed within the tubular body 30 and movable between an open position and a closed position to allow and prevent the outflow of the work fluid through the passage channel 31, respectively. Specifically, the transition of the valve assembly 32 between the closed position and the open position is caused by the coupling and uncoupling of the second female joint 5 with the second male joint 7.

In more detail, the coupling and uncoupling of the second joints 5, 7 causes the valve assembly 32 to move to the open position and to the closed position, respectively. Specifically, the valve assembly 32 comprises:
- at least one fixed body 36 bounding at least one passageway 44 of the passage channel 31 communicating with the sensing means 15 and which is provided with at least one passage opening 39 for the outflow of the work fluid coming from the second male joint 7 within the passageway 44;
- at least one valve element 34 associated with the fixed body 36 in a sliding manner between the open position, wherein it allows the passage of the work fluid through the passage opening 39, and the closed position, wherein it is tightly associated with the fixed body 36 by isolating the passageway 44.

In particular, the passageway 44 communicates with the joining means 53 in a fluid-operated manner.

Advantageously, the fixed body 36 comprises a first stretch 37 provided with first sealing means 46 and a second stretch 38 provided with second sealing means 47.

In addition, the passage opening 39 is placed between the first sealing means 46 and the second sealing means 47.

In addition, the valve element 34 is tightly associated with the first sealing means 46 and with the second sealing means 47 in the closed position and is disengaged from the second sealing means 47 in the open position, thus allowing the passage of the work fluid through the passage opening 39.

Advantageously, the valve element 34, in its displacement from the open position to the closed position, performs a stroke stretch in engagement with the second sealing means 47.

In addition, with the valve element 34 in the closed position between the first sealing means 46 and the second sealing means 47 an expandable chamber 40 is defined. Specifically, the valve element 34 varies the volume of the expandable chamber 40 during the stroke stretch.

This expedient ensures that, in the closed position, the second pressure drops below the threshold value, so that the sensing means 15 are allowed to move the valve means 10 to the supply position.

Appropriately, the second female joint 5 comprises at least one elastic element 35 operating in conjunction with the valve element 34.

Specifically, the elastic element 35 is elastically charged as a result of the transition from the closed position to the open position.

In this way, the elastic element 35 tends to elastically counteract the movement of the valve element 34 from the closed position to the open position.

In other words, the elastic element 35 naturally tends to move and to keep the valve element in the closed position.

Conveniently, the first stretch 37 has a first diameter and the second stretch 38 has a second diameter.

In addition, the valve element 34 has a first segment 49 associated with the first sealing means 46 in a sliding manner and a second segment 50 associable with the second sealing means 47 in a sliding manner, wherein the first segment 49 has a larger diameter than the second segment 50.

Conveniently, the second sealing means 47 may be of the one-way type, so as to relieve any overpressures operating within the expandable chamber 40.

According to a further aspect, the present invention relates to a method of using a device 1 for controlling the braking of a trailer, comprising:
- at least one phase of supply of a device 1;
- at least one phase of connecting the device 1 to a towing vehicle;
- at least one phase of releasing the parking and/or automatic brake of the trailer.

In particular, the phase of releasing the parking and/or automatic brake comprises at least one step of pressurization of the additional line 6 until the switching value is achieved.

Specifically, the phase of pressurization of the additional line 6 is carried out by releasing the parking brake of the towing vehicle.

In addition, the phase of releasing the parking and/or automatic brake comprises at least one pressurization of the control line 3 until the reference value is achieved.

In more detail, the step of pressurization of the control line 3 is carried out by the application of the service brake of the towing vehicle.

In addition, the phase of releasing comprises at least one step of pressurization of the accumulator 9 until the switching value is achieved.

Specifically, the phase of pressurization of the accumulator 9 is carried out by the application of the service brake of the towing vehicle.

Conveniently, the step of pressurization of the additional line 6 is carried out prior to the step of pressurization of the control line 3.

In other words, the step of pressurization of the additional line 6 is carried out prior to the first application of the service brake of the towing vehicle which is required to release the automatic braking of the trailer.

It has in practice been ascertained that the described invention achieves the intended objects.

In particular, the fact is emphasized that the connecting means, the power line and the sensing means allow the functionality of the device to be expanded compared to the devices of known type.

In addition, the connecting means, the power line and the sensing means make it easier to use the device compared to the devices of known type.

In addition, the connecting means, the power line and the sensing means allow the status of the device to be checked conveniently and quickly.

Again, the electric/electronic connection between the connecting means, the power line and the sensing means allow the device to be reset quickly and easily.

## Claims

1. Device (1) for controlling the braking of a trailer, comprising:
- at least one first female joint (2) communicating with a control line (3) connectable to the braking system of a trailer and intended to receive a first male joint (4) of a towing vehicle connectable to a source of a work fluid at a first pressure;
- at least one second female joint (5) communicating with an additional line (6) adapted to control the automatic and/or parking brake of the trailer and intended to receive a second male joint (7) of a towing vehicle connectable to a source of a work fluid at a second pressure;
- at least one primary braking line (8a) connectable to the braking system of the trailer;
- at least one secondary braking line (8b) connectable to the automatic and/or parking brake of the trailer;
- at least one accumulator (9) connected to said control line (3) in a fluid-operated manner and connectable to said secondary braking line (8b) in a fluid-operated manner;
- valve means (10) placed between said accumulator (9) and said secondary braking line (8b) and movable between at least one supply position, wherein said accumulator (9) is placed in communication with said secondary braking line (8b), and at least one isolation position, wherein said accumulator (9) is isolated from said secondary braking line (8b);
- at least one power line (11) connected to said second female joint (5) and provided with an electrical connector (12) adapted to be coupled to a corresponding electrical connector of the towing vehicle;
- sensing means (15) of said second pressure arranged along said additional line (6); wherein:
- said additional line (6) comprises electrical connecting means (16) placed between said second female joint (5) and said valve means (10);
- said sensing means (15) are configured to command the movement of said valve means (10) between said supply position and said isolation position by means of said connecting means (16) depending on said second sensed pressure;
- said power line (11) is configured to exchange at least one electric/electronic signal with said valve means (10) by means of said connecting means (16);
**characterized by** the fact that said device (1) comprises:
- at least a first portion (22) connected to said second female joint (5) and connectable to the second male joint (7) of the towing vehicle;
- at least a second portion (23) coupled, in use, to said first portion (22) in a removable manner;
and by the fact that:
- said connecting means (16) are placed between said second portion (23) and said valve means (10);
- the coupling and uncoupling of said portions (22, 23) electrically connects and disconnects said connecting means (16) from said sensing means (15) and/or from said power line (11), respectively.

2. Device (1) according to claim 1, **characterized by** the fact that said power line (11) is configured to transmit at least one electric/electronic command signal to said valve means (10) so as to command the displacement thereof from the supply position to the isolation position.

3. Device (1) according to one or more of the preceding claims, **characterized by** the fact that said power line (11) is operationally connected to said sensing means (15) and is configured to transmit said at least one electric/electronic command signal upon reaching a threshold value of the second pressure sensed by said sensing means (15).

4. Device (1) according to one or more of claims 2 to 3, **characterized by** the fact that it comprises measuring means (19) of said first pressure configured to allow the transmission of said electric/electronic command signal upon reaching a reference value of the first pressure measured by said measuring means (19).

5. Device (1) according to one or more of the preceding claims, **characterized by** the fact that said valve means (10) comprise identifying means (20) of the pressure of the work fluid within said accumulator (9) and by the fact that:
- said identifying means (20) are configured to allow the transmission of said electric/electronic command signal upon reaching a threshold value of the pressure of the work fluid identified by said identifying means (20); and/or
- said power line (11) is configured to transmit at least one electric/electronic alarm signal depending on said identified pressure.

6. Device (1) according to one or more of the preceding claims, **characterized by** the fact that it comprises joining means (53) placed between said second female joint (5) and said first portion (22), connecting them together in a fluid-operated manner.

7. Device (1) according to one or more of the preceding claims, **characterized by** the fact that said electrical connector (12) is directly connected integral to said first portion (22).

8. Device (1) according to one or more of the preceding claims, **characterized by** the fact that said power line (11) is connected to said first portion (22).

9. Device (1) according to one or more of the preceding claims, **characterized by** the fact that it comprises at least one switching component (25) placed between said first and said second portions (22, 23) and switchable as a result of the coupling and uncoupling of said portions (22, 23), said power line (11) being configured to transmit at least one electric/electronic warning signal depending on the switching of said switching component (25).

10. Device (1) according to one or more of the preceding claims, **characterized by** the fact that it comprises temporary fastening means (26) for temporarily fastening said second portion (23) to said first portion (22) movable between an engagement position, wherein said second portion (23) is fastened to said first portion (22), and a disengagement portion, wherein said second portion (23) is released from said first portion (22).

11. Device (1) according to claim 10, **characterized by** the fact that said connecting means (16) are mechanically connected to said control line (3) and by the fact that said fastening means (26) either are displaced from the engagement position to the disengagement position before said connecting means (16) are put under tension as a result of the tensioning and of the disconnection of said control line (3) or said fastening means (26) are of the interlocking type and are displaced from the engagement position to the disengagement position as a result of the tensioning of said connecting means (16).

12. Device (1) according to one or more of the preceding claims, **characterized by** the fact that said first portion (22) defines an additional channel (24) for the passage of the work fluid to the second pressure and wherein which said sensing means (15) are arranged and by the fact that said additional line (6) is of electric/electronic type and is electrically connected to said sensing means (15).

13. Device (1) according to one or more of claims 4 to 12, **characterized by** the fact that said valve means (10) comprise:
- at least a first switching element (28) electrically connected to said connecting means (16) and to said measuring means (19), said first switching element (28) being switchable depending on said first sensed pressure and on said electric/electronic command signal;
- at least a second switching element (29) electrically connected to said first switching element (28) and to said identifying means (20), said second switching element (29) being switchable depending on the switching of said first switching element (28) and of said pressure identified by said identifying means (20);
and **characterized by** the fact that said valve means (10) are moved between said supply position and said isolation position depending on the switch of said switching elements (28, 29).

14. Device (1) according to one or more of the preceding claims, **characterized by** the fact that said second female joint (5) comprises a tubular body (30) defining a passage channel (31) of the work fluid and a valve assembly (32) housed within said tubular body (30) and movable between an open position and a closed position to allow and prevent the outflow of the work fluid through said passage channel (31), respectively.

15. Device (1) according to claim 14, **characterized by** the fact that said valve assembly (32) comprises:
- at least one fixed body (36) bounding at least one passageway (44) of said passage channel (31) communicating with said sensing means (15) and which is provided with at least one passage opening (39) for the outflow of the work fluid from the second male joint (7) within said passageway (44);
- at least one valve element (34) associated with said fixed body (36) in a sliding manner between said open position, wherein it allows the passage of the work fluid through said passage opening (39), and said closed position, wherein it is associated with the fixed body (36) in a sealing manner, thus isolating said passageway (44).
